# EUROPEAN PATENT APPLICATION

(11) **EP 4 474 043 A1**
(43) Date of publication of application: **11.12.2024**
(21) Application number: 23177693.1
(22) Date of filing: 06.06.2023
(51) Int. Cl.: B01J 8/06, B01J 19/00, C10G 9/36, C10G 9/40

(54) **FURNACE WITH ELECTRIC HEATING DEVICE AND CONVECTION VOLUME**

(71) Applicant: Axens, 92500 Rueil Malmaison (FR)
(72) Inventor: LE COZ, Jean-François, 92500 RUEIL-MALMAISON (FR); TISON, Thierry, HOUSTON TX, 77056 (US); LEROUX, Jean-Noël, 92500 RUEIL-MALMAISON (FR); SCHWALJE, David, PRINCETON, NJ, 08540 (US)
(74) Representative: IFP Energies nouvelles

(57) **Abstract**

The present invention relates to a furnace for heating a fluid feedstock, which comprises a radiation volume (1) and a convection volume (2). The radiation volume (1) comprises at least one electric heating device (12, 14, 9, 21).

## Description

### Technical field

The present invention relates to the field of furnaces as a primary source of thermal energy for process heating operations in petroleum refining and chemical plants.

For example, the invention may relate to rising temperature of hydrocarbon feedstocks, in furnaces used in any process in which heating and/or thermal conversion of reactants, for example via a cracking reaction, or combination of molecules with one another at high temperature, is required, such as in the fields of refining, of petrochemistry or of the chemistry of monomers, or of compounds used to manufacture semiconductors, in the food industry or in any other industry in which tubular furnaces are used.

The invention relates to any type of furnace comprising tubes conveying the fluid to be heated or heat-treated, this type of furnace commonly being referred to as tubular furnaces (in the context of the invention, the term "heat-treated" will encompass purely heating or heat-treating). Conventionally, in tubular furnaces, heat is generated by combustion of fuel emitting thermal radiation towards tubes to be heated in a first step, then heat is transferred from the gases produced by the combustion to tubes by convection mainly in a second step.

### Prior art

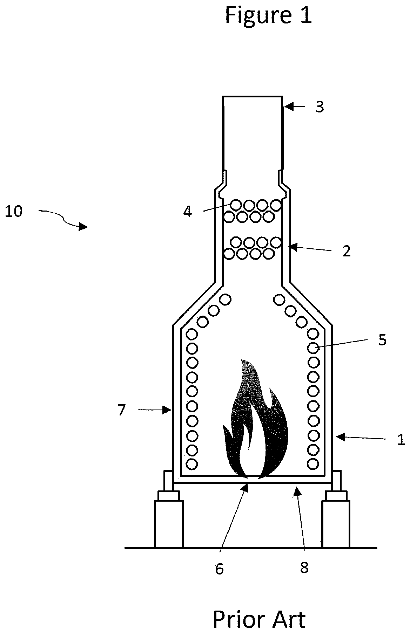

Conventionally, such furnaces, especially tubular furnaces, use combustion of a fuel as heat source. In the rest of the description, these furnaces are called "combustion furnaces", or "combustion tubular furnaces" where appropriate. Figure 1 schematically illustrates such a combustion furnace. The combustion tubular furnace 10 comprises a radiation volume 1, a convection volume 2 and a chimney 3. In a position of use of the furnace 10, the convection volume 2 is arranged above the radiation volume 1, and the chimney 3 is arranged above the convection volume 2, a gas flowing upward within the furnace 10. The radiation volume 1 comprises a plurality of radiation tubes 5, through which flows a fluid to be heat-treated (such a fluid is called the fluid feedstock in the remainder of the description). The radiation tubes may be arranged in proximity to the walls 7 of the heat-treating furnace. The radiation volume 1 comprises, on its bottom 8 (a.k.a. its floor), at least one burner 6 for generating the combustion of a fuel in the radiation volume 1. This combustion generates heat, which is transmitted by radiation to the fluid feedstock in the radiation tubes 5. The convection volume 2 comprises a plurality of convection tubes 4 through which the fluid to be heat-treated flows. This volume comprises no heat source. Hot gas coming from the radiation volume 1 transmits by convection heat to the fluid feedstock in the convection tubes 4.

Patent application FR2850392 describes one example of such a combustion tubular furnace.

The main drawback of this furnace is its environmental footprint and energy consumption. Specifically, combustion uses hydrocarbons and generates emission of pollutants, which are removed directly to the atmosphere. These pollutants may comprise (depending on the fuel used) carbon dioxide, nitrogen oxides, particles, and carbon monoxide. In addition, because the heat is generated by combustion, it is difficult to obtain a uniform temperature and to control temperature and, therefore, it is difficult to precisely control the temperature of the fluid feedstock.

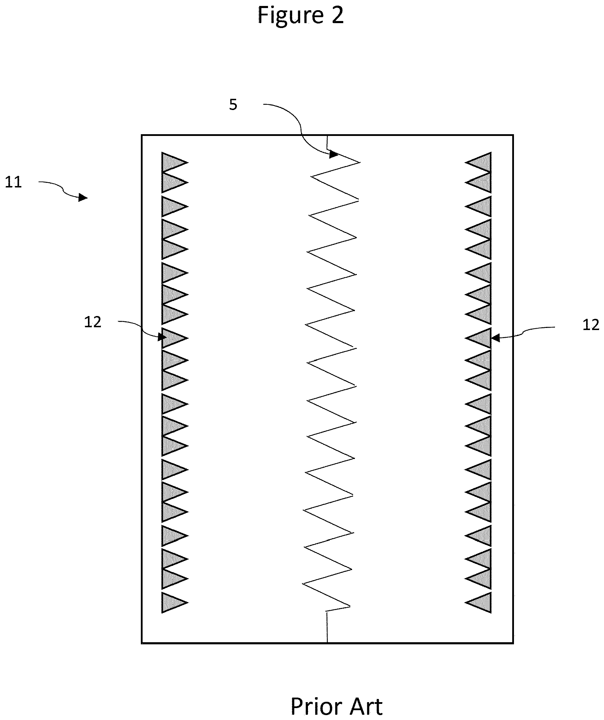

To mitigate these drawbacks, heat-treating furnaces have been developed that use Joule heating, or in other words that use electric heating devices. In the rest of the description, these furnaces are called "electric furnaces", or "electric tubular furnaces" where appropriate. Figure 2 schematically illustrates an electric tubular furnace. The electric tubular furnace 11 comprises a plurality of tubes 5 for flow of a fluid feedstock. The electric tubular furnace 11 comprises at least one electric heating device 12 that is directed towards the tubes 5 (in the embodiment shown, if the furnace has a cylindrical shape, the electric heating device 12 may be cylindrical). The electric heating device generates heat, which is transmitted by radiation to the plurality of tubes 5 and therefore to the fluid feedstock.

The main drawback of this electric tubular furnace is its cost and also its environmental impact as, for an existing installation, it requires a furnace that is already present to be replaced with a new electric tubular furnace. Thus, this replacement generates a substantial amount of waste to be processed. In addition, in such a furnace it is difficult to form a temperature gradient favourable to the feedstock to be heat-treated.

### Summary of the invention

An aim of the present invention is to limit the environmental impact and energy consumption of a furnace for heat-treating a fluid feedstock, while allowing maximum reuse of an existing installation. Another aim of the invention is to make it possible to precisely control temperature within the heat-treating furnace. To this end, the present invention relates to a furnace for heating a fluid feedstock, which comprises a radiation volume and a convection volume. The radiation volume comprises at least one electric heating device. Implementation of an electric heating device limits emission of pollutants. In addition, use of two volumes (one radiation volume and one convection volume) allows a combustion furnace, and especially a combustion tubular furnace, to be reused, this limiting waste, and allowing an optimized transfer of energy and an optimized thermal gradient.

The invention further relates to a heat-treating unit comprising such a heat-treating furnace, and to a method for retrofitting (the term "revamping" is also in common use) a combustion furnace and especially a combustion tubular furnace.

The invention concerns a furnace for heating a fluid feedstock, said furnace comprising a radiation volume, said radiation volume comprising a plurality of radiation tubes for flow of said fluid feedstock and at least one electric heating device, heat generated by said at least one electric heating device being transmitted by radiation to said plurality of radiation tubes. Said furnace further comprises a convection volume arranged above or beside said radiation volume in a position of use of said furnace, such that a gas coming from said radiation volume flows through said convection volume, and in that said convection volume comprises a plurality of convection tubes for flow of said fluid feedstock, heat generated by said at least one electric heating device of said radiation volume being transmitted by convection to said plurality of convection tubes.

According to an embodiment, at least one electric heating device is arranged along at least one wall of said radiation volume.

According to an embodiment, at least one electric heating device is arranged at the centre of said radiation volume, especially horizontally or vertically.

According to an embodiment, said furnace further comprises an inlet for at least one gas into the lower portion of said radiation volume in the position of use of said furnace, and at least one chimney in the upper portion of said convection volume in the position of use of said furnace for exhausting gas.

According to an embodiment, said radiation volume comprises at least one complementary non-electric heating device, especially a burner.

According to an embodiment, at least one heating device comprises a bundle of electric resistors taking the form of metal strips or wires, said metal strips or wires preferably being suspended or fastened to a panel.

According to an embodiment, said convection volume further comprises a plurality of secondary convection tubes for flow of at least one secondary fluid, heat generated by said at least one electric heating device being transmitted by convection to said plurality of secondary convection tubes.

According to an embodiment, said furnace comprises means for controlling said at least one electric heating device.

The invention concerns a heating unit for a fluid feedstock, which comprises a furnace according to one of the preceding features, a supply of fluid feedstock to be heat-treated for supplying said furnace within the plurality of convection tubes of said convection volume, an outlet for heat-treated fluid feedstock for discharging said fluid feedstock from the plurality of radiation tubes of said radiation volume, and a gas supply of said furnace.

According to an embodiment, the gas supply of said furnace comprises at least one pre-heating heat exchanger, especially an electric heat exchanger or a heat exchanger with a gas coming from the chimney of said furnace.

According to an embodiment, said furnace comprises a chimney for exhausting gas in the upper portion of said convection volume in the position of use of said furnace, said chimney of said furnace being linked to said gas supply of said furnace.

According to an embodiment, said heating unit further comprises a fuel supply.

The invention concerns a method for retrofitting a furnace for heating a fluid feedstock by combustion of a fuel, said furnace comprising a radiation volume equipped with a plurality of radiation tubes for flow of said fluid feedstock, and a convection volume equipped with a plurality of convection tubes for flow of said fluid feedstock, the convection volume being arranged above or beside said radiation volume in a position of use of said furnace, such that a gas coming from said radiation volume flows through said convection volume, said radiation volume comprising at least one burner for generating heat to drive the combustion of a fuel. At least the following step is carried out:
a. said radiation volume is equipped with at least one electric heating device, in particular along at least one wall of said radiation volume or at the centre of said radiation volume.

According to an embodiment, the method comprises a step of demounting at least one burner within the furnace.

According to an embodiment, the method comprises at least one of the following steps:
a. at least one holder for said electric heating device is installed in said radiation volume;
b. at least one electric and/or thermal insulator is installed in said radiation volume;
c. means for forcing gas to flow are installed within said furnace; and
d. means for instrumenting and controlling said at least one electric heating device are installed.

Other features and advantages of the systems and method according to the invention will become apparent on reading the following description of non-limiting examples of embodiment with reference to the appended figures described below.

### List of the figures

Figure 1, described above, illustrates a heat-treating combustion furnace according to the prior art.
Figure 2, described above, illustrates a heat-treating electric furnace according to the prior art.
Figure 3 illustrates a heat-treating furnace according to a first embodiment of the invention.
Figure 4 illustrates a heat-treating furnace according to a second embodiment of the invention.
Figure 5 is an enlargement of the mounting of the electric heating device of the second embodiment of the invention.
Figure 6 illustrates a heat-treating furnace according to a third embodiment of the invention.
Figure 7 illustrates a heat-treating furnace according to a fourth embodiment of the invention.
Figure 8 illustrates a heat-treating furnace according to a fifth embodiment of the invention.
Figure 9 illustrates a heat-treating furnace according to a sixth embodiment of the invention.
Figure 10 illustrates an electric heating device and its installation according to a first variant of embodiment of the invention.
Figure 11 illustrates an electric heating device according to a second variant of embodiment of the invention.
Figure 12 illustrates a heat-treating unit according to a first implementation of the invention.
Figure 13 illustrates a heat-treating unit according to a second implementation of the invention.
Figure 14 illustrates a heat-treating unit according to a third implementation of the invention.
Figure 15 illustrates a heat-treating unit according to a fourth implementation of the invention.

### Description of the embodiments

The present invention relates to heating a fluid feedstock by means of a furnace. The term "heating" is understood to mean a heating operation involving modification of the fluid feedstock. The term "fluid feedstock" is understood to mean a composition to be heat-treated taking the form of a fluid (gas or liquid). For example, the invention may relate to heat treatment of hydrocarbon feedstocks, in any process in which heating and/or thermal conversion of reactants, for example via a cracking reaction, or combination of molecules with one another at high temperature is required in the fields of refining, of petrochemistry or of the chemistry of monomers, or of compounds used to manufacture semiconductors, in the food industry or in any other industry in which furnaces, and especially tubular furnaces, are used.

With this aim, the invention relates to:
- a furnace,
- a heating unit implementing a furnace according to the invention, and
- a method for retrofitting (or revamping) a combustion furnace to form a furnace according to the invention.

These three subjects will be addressed in detail in the remainder of the description.

In the remainder of the description, the arrangement of the various elements ("above", "below", "at the centre", "vertically", "horizontally", etc.) is described for the position of use of the furnace and/or of the heating unit.

### Furnace

According to the invention, the furnace for heating a fluid feedstock comprises:
- a radiation volume comprising a plurality of radiation tubes (also called radiation tubes) for flow of the fluid feedstock, and at least one electric heating device, the heat generated by the at least one electric heating device being transmitted by radiation to the plurality of radiation tubes, and a fortiori to the fluid feedstock flowing through the plurality of radiation tubes,
- a convection volume comprising a plurality of convection tubes (also called convection tubes), the convection volume being arranged above or beside the radiation volume, such that a gas coming from the radiation volume flows through the convection volume, the heat generated by the at least one electric heating device of the radiation volume being transmitted by convection to the plurality of convection tubes, and a fortiori to the fluid feedstock flowing through the plurality of convection tubes.

The term "volume" is understood to mean a space closed by walls. An electric heating device is a resistance carrying an electric current, subjected to Joule effect and as such becoming a source of heat produced using electric energy. Thermal radiation, also called radiant heat, is a transfer of energy by emission of infrared electromagnetic radiation. Thermal convection is associated with movement of a fluid. In order to achieve transfer by radiation, the at least one electric heating device is arranged so as to face the plurality of radiation tubes.

Within the furnace according to the invention, each electric heating device heats by radiation the radiation tubes. In addition, each electric heating device heats the gas contained in the radiation volume. Since such a heated gas is lighter and/or because of a forced or natural movement of the gas, it moves into the convection volume, in which it transfers heat to the convection tubes. Use of an electric heating device makes it possible to generate, simply and inexpensively, a heat-treating furnace with a limited environmental footprint. The electric heating device facilitates precise control of the temperature within the furnace. Use of a radiation volume and of a convection volume makes it possible to be able to reuse a structure of an existing (combustion) furnace and allows heat exchange to be optimized (because heat is transferred both by radiation and by convection). Furthermore, the furnace according to the invention allows problems related to the film temperature of the fluid feedstock (for example coking, degradation of the fluid, corrosion of the tubes) to be decreased, and problems related to the high temperature of the metal of the tubes (for example lifespan of the tubes, breakage of the tubes) to be decreased and the risk of fouling to be decreased.

Preferably, the convection volume does not include any heating device (whether electric or not). In other words, the convection volume may have as heat source only the gas coming from the radiation volume.

Advantageously, the plurality of convection tubes is linked to the plurality of radiation tubes, such that the fluid feedstock first flows through the plurality of convection tubes for preheating the fluid feedstock, then through the radiation tubes being heated to a higher temperature.

The radiation tubes and/or the convection tubes may be arranged horizontally, vertically or in the form of a helix, or in any analogous form.

Advantageously, the radiation tubes and/or the convection tubes may have a large exterior surface area, to increase the area of heat exchange. The area of heat exchange may be increased, especially using fins (helicoidal fins for example) or pins or any analogous protrusion.

The furnace may have a cylindrical (tubular) or parallelepipedal shape, or any analogous shape. The cross-sectional area of the convection volume may for example be smaller than the cross-sectional area of the radiation volume. As a variant, the cross-sectional area of the convection volume may be larger than or equal to the cross-sectional area of the radiation volume.

According to one embodiment, at least one electric heating device may be arranged along a wall of the radiation volume. It may be straightforwardly an external wall of the radiation volume (i.e. a wall delineating the envelope of the radiation volume) or of a dedicated added internal wall within the radiation volume dividing the radiation volume in two or several subvolumes. This embodiment allows at least one electric heating device to be positioned in proximity to the radiation tubes, so as to promote heat exchange. Advantageously, at least one electric heating device may be arranged vertically, so as to deliver heat to a large percentage of the height of the radiation volume. Alternatively or in addition, at least one electric heating device may be arranged horizontally, on the bottom of the radiation volume.

According to one implementation of the invention, at least one electric heating device may be arranged at the centre of the radiation volume. It may be in the region in which combustion was intended to occur in a combustion furnace. Thus, the radiation volume may be optimized spatially. A first variant of this implementation may consist in arranging at least one electric heating device vertically, allowing a large percentage of the height of the radiation volume to be heated. To implement this variant, means for fastening the electric heating device may be provided on the bottom of the radiation volume (this configuration allows a burner to be simply replaced with an electric heating device, in the case of retrofitting of a combustion tubular furnace), and/or a vertical central wall may be provided at the centre of the radiation volume, on which wall an electric heating device may be installed. A second variant of this implementation may consist in arranging at least one electric heating device horizontally, allowing a more uniform heating to be achieved.

According to one embodiment of the invention, the furnace may comprise at least one electric heating device on a wall defining the radiation volume and at least one, preferably vertical, central electric heating device. This combination of electric heating devices allows the radiation tubes to be heated electrically on a number of sides and allows improving a homogenous temperature distribution. This configuration is particularly advantageous in furnaces of small size.

In order to generate a flow of a convective fluid (the term "gas" is used in the rest of the description), the furnace may comprise at least one inlet for at least one gas into the lower portion of the radiation volume, for supplying the gas, and at least one chimney in the upper portion of the convection volume, for exhausting the gas. The chimney has a cross-sectional area smaller than the cross-sectional area of the convection volume. The gas may especially be air, or an inert gas. Thus, the gas flows in succession through the inlet, through the radiation volume, through the convection volume then through the chimney.

According to one particular embodiment, the at least one inlet for gas flow into the radiation volume may comprise means for giving a tangential velocity component to the gas, thereby generating a macroscopic rotational movement of the gas inside said radiation volume, and thus increases heat exchange between the electric heating device and the tubes by turbulent convection. One possibility is for the at least one gas inlet to be positioned in such a way that its direction gives the gas a tangential velocity component, which may be achieved either by translating one or more of these ducts with respect to the axis of symmetry of the radiation volume, or by orienting with an angle different from 90 degrees the one or more holes formed by the gas inlets in the wall of the furnace. A second possibility consists in equipping the gas inlets with fins or vanes, and thus generating a rotation of the gas as it penetrates into the radiation volume. A third possibility is to bend the end of one or more gas inlets, and thus orient the flux tangentially as it penetrates into the radiation volume.

According to one option of embodiment of the invention, the radiation volume may further comprise at least one complementary non-electric heating device. In this way, it is possible to increase the temperature within the furnace, to improve heat transfer, and to improve temperature control. According to one non-limiting example, the complementary heating device may be a burner. At least one burner may be arranged on the bottom of the radiation volume, and/or on a wall of the radiation volume. The burner is supplied with a fuel in gaseous or liquid form. In the remainder of the description, this type of furnace will be referred to as a "hybrid furnace". This embodiment allows a combustion heat-treating furnace to be reused, without uninstalling too many components. Such a hybrid furnace may operate only using electricity, only using combustion, or using electricity and combustion simultaneously. The choice of the operating mode may especially be made depending on the desired temperature and/or the availability of one energy source relative to another or the cost of one energy source relative to another, or on an emission quota of carbon dioxide or of other pollutants such as soot particles, carbon monoxide, nitrogen oxide, sulfur-containing compounds and other species that are noxious or subject to regulation. Specifically, using electric energy allows emission of these pollutants to be lowered, either to zero in case of operation using electricity exclusively, or partially in case of hybrid operation using some fuel and some electricity.

According to one design of the invention, the gas (convective fluid) may optionally be compressed beforehand, especially in order to generate a forced flow of fuel when it is necessary, as with a recirculation of this gas from the chimney back to the radiation zone.

According to one embodiment of the invention, the electric heating device may comprise a bundle of metal strips or wires forming a resistor. A current is made to pass through these metal strips or wires in order to generate heat by Joule effect. Preferably, the bundle of metal strips or wires may be shaped so as to substantially have a serpentine shape, a spiral shape or any other analogous shape, so as to achieve a high density of metal strips or wires, and therefore a source of more heat. According to a first variant of this embodiment, the bundle of metal strips or wires may be mounted on a panel, preferably a panel made of an electrically and thermally insulating material, and which preferably emits thermal radiation towards the interior of the furnace and therefore towards the radiation tubes. For example, the panel may be made from ceramic fibres and the metal strips or wires are maintained by hooks, clips, staples, fasteners or other means. This embodiment in panel form makes for easier arrangement, especially on a wall. According to a second variant of this embodiment, the bundle of metal strips or wires may be suspended, for example from a hanger. This embodiment makes for easier installation. Other analogous embodiments may be implemented. The electric resistors may be made of an alloy, for example of a nickel-chromium alloy or an iron-chromium-aluminium alloy, etc.

According to one embodiment, to improve heating, the furnace may comprise at least one reflective or high-emissivity element. The reflective element may be made of a metal, whereas the high-emissivity element for example comprises an emissive coating based on a metal oxide.

According to one aspect of the invention, the furnace may comprise control means for controlling the at least one electric heating device. The control means allow the temperature within the radiation volume to be regulated. For example, the control means may vary the current and/or voltage of at least one electric heating device to vary the temperature. The control means may be associated with instruments of the furnace, in order to determine/check the operating conditions: for example, at least one temperature sensor, one current sensor in at least one electric heating device, one voltage sensor in at least one electric heating device, at least one sensor of gas flow rate, etc.

Advantageously, the convection volume may comprise a plurality of secondary convection tubes for flow of at least one secondary fluid (other than the fluid feedstock). The heat generated by the at least one electric heating device located in the radiation volume is transmitted by convection to the plurality of secondary convection tubes. Thus, heat is recovered for other applications, thus limiting losses. The secondary fluid may especially be water, or steam/water vapour, especially used in other units for heating utilities. In this embodiment, the secondary convection tubes may be arranged above or downstream the convection tubes for flow of the fluid feedstock. Thus, the hottest gas just coming from the radiation volume is mainly used to heat the fluid feedstock first, then for a secondary fluid.

By way of non-limiting example, the electric heating device may be intended to heat to a temperature comprised between 250 and 1200°C.

According to one non-limiting implementation, the electric heating device may be intended to have a power comprised between 1 and 100 MW.

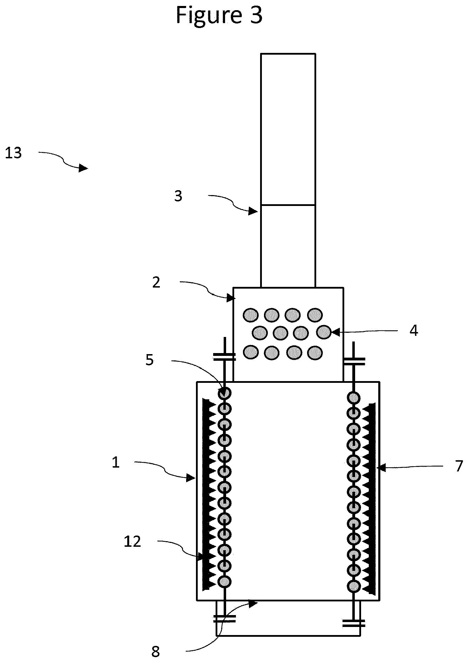

Figure 3 illustrates, schematically and in a non-limitative way, a first embodiment of a furnace according to the invention. The furnace 13 comprises a bottom 8, a radiation volume 1, a convection volume 2 and a chimney 3. The radiation volume 1 comprises a plurality of radiation tubes 5 for flow of a fluid feedstock (not shown). In the illustrated embodiment, the radiation tubes 5 are helical and arranged in proximity to the vertical exterior wall 7 of the radiation volume 1. The convection volume 2 comprises a plurality of convection tubes 4 for flow of a fluid feedstock. In the illustrated embodiment, the convection tubes 4 are substantially horizontal. Furthermore, the furnace comprises an electric heating device 12. The electric heating device 12 is arranged vertically between the vertical exterior wall of the radiation volume and the radiation tubes 5. In addition, the electric heating device 12 is directed towards the radiation tubes 5. In the illustrated embodiment, the electric heating device 12 extends along substantially the entire height of the radiation volume 1.

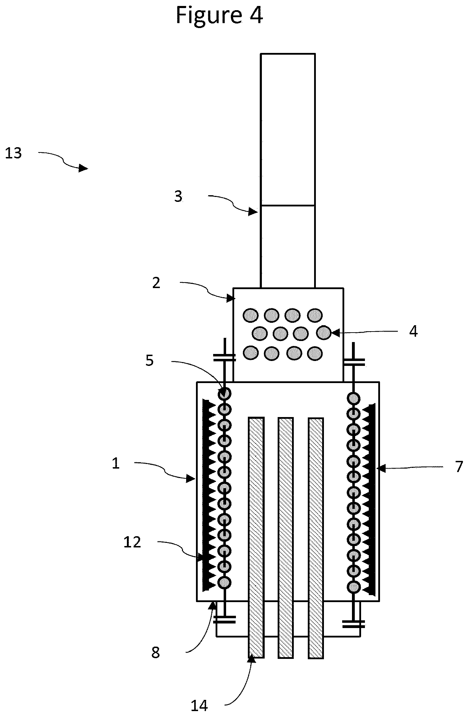

Figure 4 illustrates, schematically and in a non-limitative way, a second embodiment of a heat-transferring furnace according to the invention. Elements that are identical to those of the embodiment of Figure 3 will not be described again. The furnace 13 further comprises a plurality of vertical electric heating devices 14 mounted in the bottom 8 of the radiation volume, and arranged in the centre of the radiation volume 1. In the illustrated embodiment, the vertical electric heating devices 14 have a height slightly smaller than the height of the radiation volume 1. Three electric heating devices have been illustrated; however, the furnace may comprise any number of electric heating devices 14. As a variant of the embodiment of Figure 4, the furnace may not comprise the electric heating device 12.

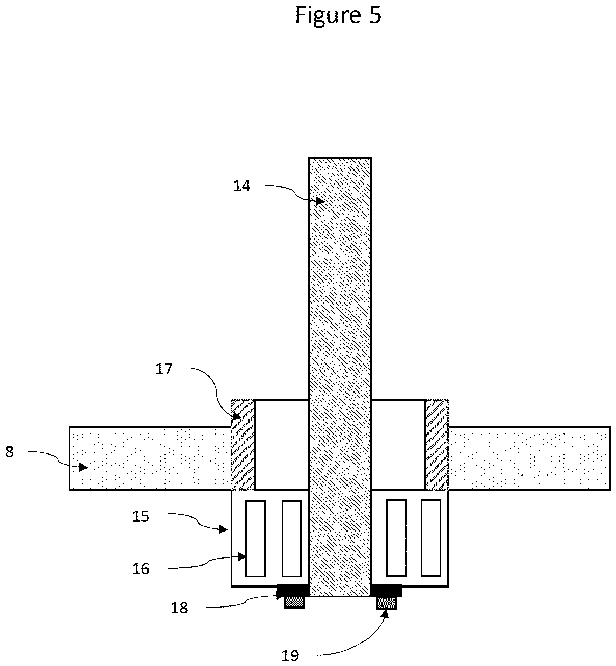

Figure 5 illustrates, schematically and in a non-limitative way, a fastening of an electric heating device of the embodiment of Figure 4. The bottom 8 of the radiation volume 1 comprises an insert 17. Below the bottom 8 and insert 17, provision is made for a gas manifold 15 comprising a plurality of orifices 16 for passage of a gas. In this way, a gas, air for example, may enter into the radiation volume. The electric heating device 14 extends vertically, and passes through the insert 17 and the manifold 15. It may be fastened to the manifold 15 by means of a shoulder or plate 18 and fastening means 19, screws or bolts for example. This fastening allows reusing a fastening of a burner in the case of the retrofitting (revamping) of a combustion furnace, a combustion tubular furnace for example.

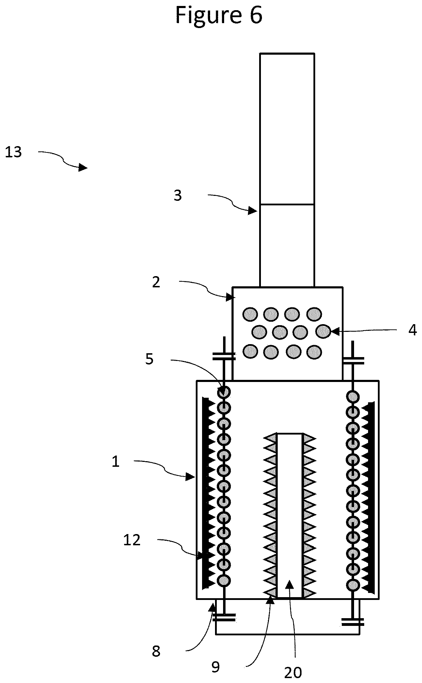

Figure 6 illustrates, schematically and in a non-limitative way, a third embodiment of a furnace according to the invention. Elements that are identical to those of the embodiment of Figure 3 will not be described again. The furnace 13 further comprises a wall 20 at the centre of the radiation volume 1. The wall 20 extends vertically from the bottom 8. The wall 20 is equipped with an electric heating device 9 that is directed towards the radiation tubes 5. Thus, the electric heating device 9 extends vertically. The height of the wall 20 and the height of the electric heating device 9 are slightly smaller than the height of the radiation volume 1. As a variant of the embodiment of Figure 6, the furnace 13 may not comprise the electric heating device 12.

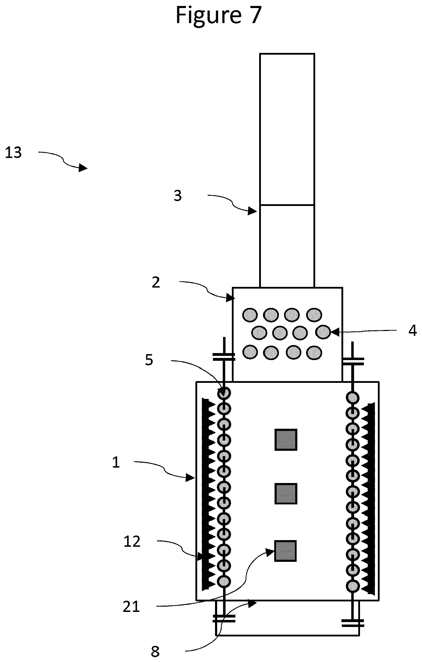

Figure 7 illustrates, schematically and in a non-limitative way, a fourth embodiment of a furnace according to the invention. Elements that are identical to those of the embodiment of Figure 3 will not be described again. The furnace 13 further comprises horizontal electric heating devices 21 arranged in the centre of the radiation volume 1. In the illustrated embodiment, the furnace comprises three horizontal electric heating devices 21 arranged on top of one another. Alternatively, the furnace 13 may comprise any other number of horizontal electric heating devices 21. As a variant of the embodiment of Figure 7, the furnace 13 may not comprise the electric heating device 12.

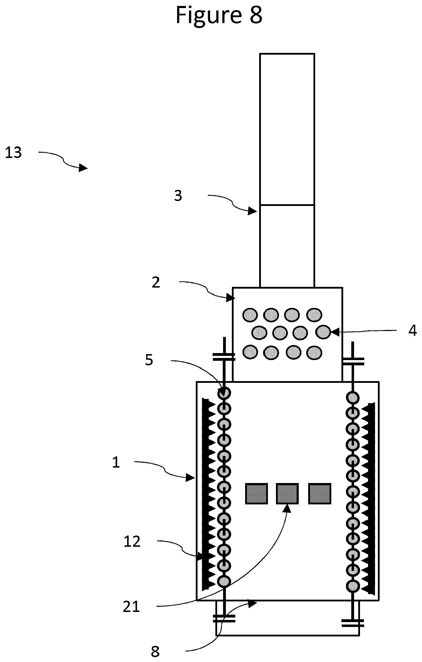

Figure 8 illustrates, schematically and in a non-limitative way, a fifth embodiment of a heat-transferring furnace according to the invention. Elements that are identical to those of the embodiment of Figure 3 will not be described again. The furnace 13 further comprises horizontal electric heating devices 21 arranged in the centre of the radiation volume 1. In the illustrated embodiment, the furnace 13 comprises three horizontal electric heating devices arranged in the same horizontal plane. Alternatively, the furnace 13 may comprise any other number of horizontal electric heating devices 21. As a variant of the embodiment of Figure 8, the furnace may not comprise the electric heating device 12, or may comprise additional horizontal electric heating devices 21 arranged similarly to those of the embodiment of Figure 7.

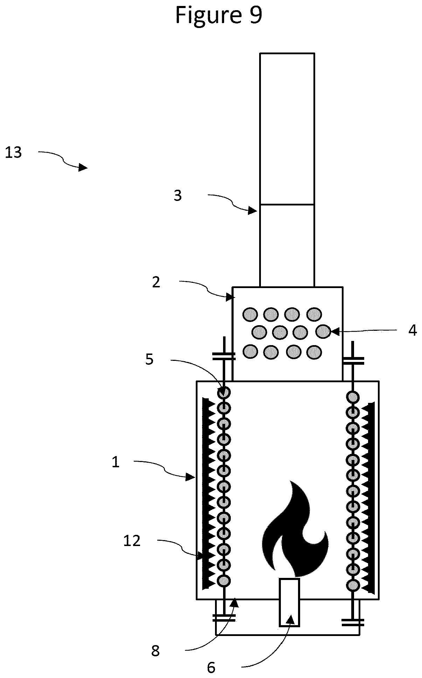

Figure 9 illustrates, schematically and in a non-limitative way, a sixth embodiment of a furnace according to the invention. Elements that are identical to those of the embodiment of Figure 3 will not be described again. The furnace 13 further comprises at least one burner 6 for generating combustion in the centre of the radiation volume 1.

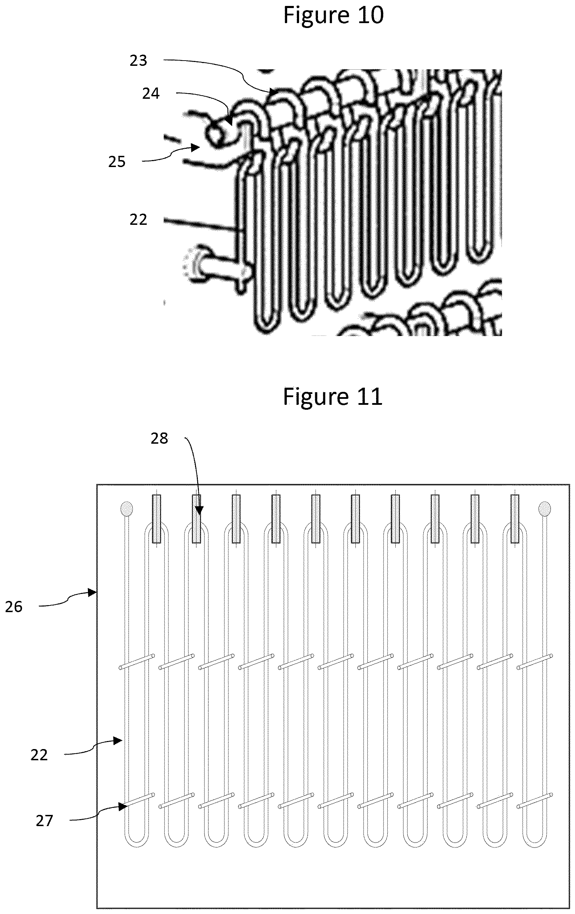

Figure 10 illustrates, schematically and in a non-limitative way, an electric heating device according to a first variant of embodiment of the invention. In this variant of embodiment, the electric heating device comprises an electric resistor formed from an electric wire 22 arranged to form a vertical serpentine. The serpentine is suspended from a hanger 24 by means of hooks 23, the hanger being held at its ends by holders 25.

Figure 11 illustrates, schematically and in a non-limitative way, an electric heating device according to a second variant of embodiment of the invention. In this embodiment, the electric heating device comprises an electric resistor formed from an electric wire 22 arranged in the form of a serpentine mounted on a panel 26. The serpentine is held on the panel via attaching means 27 and 28, such as hook or staple respectively. In the illustrated embodiment, the panel 26 is rectangular; however, it may have any other shape including a curved shape. The panel is made of a thermally and electrically insulating material, and is capable of emitting thermal radiation. For example, the material may be formed from ceramic fibres.

### Heating unit

The invention also relates to a unit for heating a fluid feedstock. The heating unit comprises:
- a furnace according to any one of the variants or combinations of variants described above,
- a supply of fluid feedstock to be heat-treated, the supply of fluid feedstock opening into the convection tubes of the convection volume of the heat-treating furnace,
- an outlet for the heat-treated fluid feedstock, for discharging the fluid feedstock from the radiation tubes of the radiation volume of the heat-treating furnace, and
- at least one supply of convective fluid (the term "gas" is used in the remainder of the description) for the heat-treating furnace, and especially of air or an inert gas, the gas potentially being compressed beforehand, or not.

The supplies and outlets of the unit are advantageously formed by pipes.

Such a unit may be a unit for heat-treating hydrocarbon feedstocks, in any process in which heating and/or thermal conversion of reactants, is required, such as in the fields of refining, of petrochemistry or of the chemistry of monomers, or of compounds used to manufacture semiconductors, in the food industry or in any other industry in which tubular furnaces are used.

According to one embodiment of the invention, the gas supply of the furnace may comprise at least one pre-heater, i.e. at least one heat exchanger for pre-heating purposes. In this way the gas may be preheated before its entry into the radiation volume, this promoting good furnace performance. The pre-heater may be an electric heat exchanger, or in other words the pre-heating may be carried out electrically. Alternatively or in addition, the pre-heater may be a heat exchanger that transfers heat between the gas entering the furnace and some of the gas exiting the furnace. Thus, it is possible to recover heat present in the gas exiting the furnace, this allowing the thermal efficiency of the heating unit to be increased, in particular in the case of a hybrid furnace.

According to one implementation of the invention, the chimney for exhausting gases from the furnace may be connected to the gas supply of the furnace by a pipe. In other words, at least some of the gas exiting the furnace may be recycled to the inlet of the furnace in order to limit the need to preheat the gas and to cool the exhausted gas (in particular when it is exhausted to atmosphere). Preferably, all of the gas exiting from the furnace may be recycled to the inlet of the furnace, this embodiment being particularly advantageous in an electric furnace.

According to one aspect of the invention, in the embodiment in which the furnace comprises at least one fuel burner, the heating unit may further comprise a fuel supply of the burner.

According to one option of embodiment, each supply or outlet may comprise at least one control valve (a.k.a. control damper) for managing the flow rate of gas, and where appropriate fuel, within the furnace.

According to one embodiment, at least one gas supply may be provided with a fan in order to force the gas flow through the pipes and through the furnace.

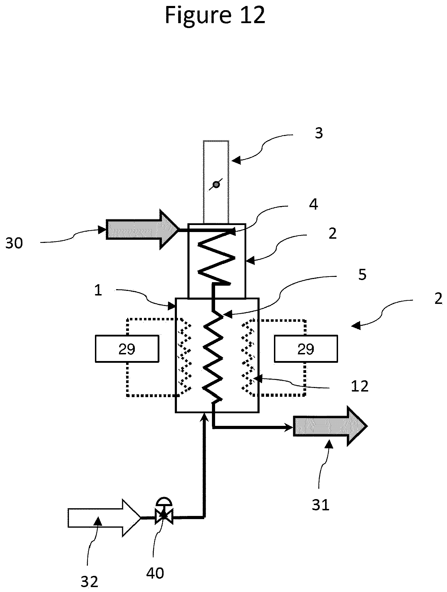

Figure 12 illustrates, schematically and in a non-limitative way, an electric heating unit according to a first implementation of the invention. The heating unit comprises a furnace according to the invention, with a radiation volume 1, a convection volume 2 and a chimney 3. The radiation volume 1 comprises radiation tubes 5 for flow of a fluid feedstock, and an electric heating device 12. The convection volume 2 comprises convection tubes 4 for flow of a fluid feedstock. The electric heating device 12 is controlled by control means 29. The unit comprises a fluid-feedstock supply 30, which is connected to the convection tubes 4, and a fluid-feedstock outlet 31, which is connected to the radiation tubes 5. The fluid feedstock flows in succession through the fluid-feedstock supply 30, the convection tubes 4, the radiation tubes 5 and the fluid-feedstock outlet 31.

The unit comprises a gas supply, especially an air supply 32. This gas supply comprises a control valve 40. This gas supply opens into the furnace, and for example onto the floor of the furnace.

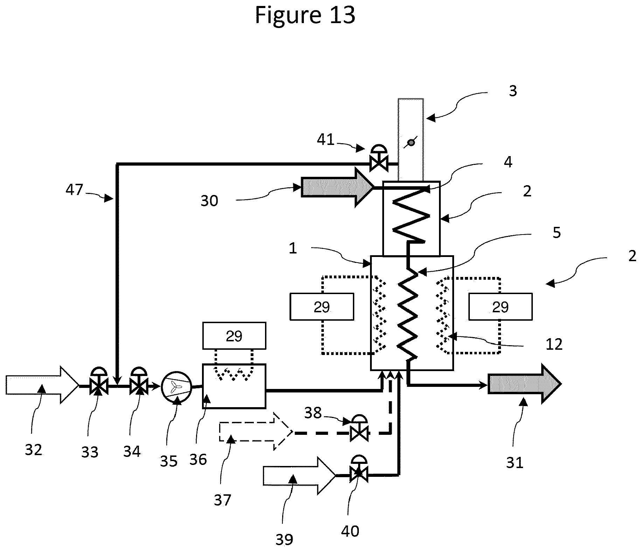

Figure 13 illustrates, schematically and in a non-limitative way, a heating unit according to a second implementation of the invention. Elements that are identical to those of the implementation of Figure 12 will not be described again.

The unit comprises an uncompressed-gas supply, especially an uncompressed-air supply 32. This gas supply comprises two control valves 33 and 34 (control dampers), a fan 35 and an electric pre-heater 36. The electric pre-heater 36 may be controlled by electric control means 29. This gas supply opens into the floor of the furnace. In the illustrated embodiment, some of the gas coming from the chimney 3 of the furnace is mixed with the supply by means of the pipe 47. The pipe 47 comprises a control valve 41 (control damper) for managing gas flow rate or pressure.

In the embodiment in which the furnace comprises at least one burner (not shown), the unit may optionally comprise a fuel supply 37. This fuel supply 37 may be equipped with a control valve 38 for managing fuel flow rate or pressure.

In the embodiment in which the furnace may have need for compressed combustion gas (such compressed air), the unit may optionally comprise a compressed combustion gas supply 39. This compressed combustion gas supply may be equipped with a control valve 40 for managing the flow rate.

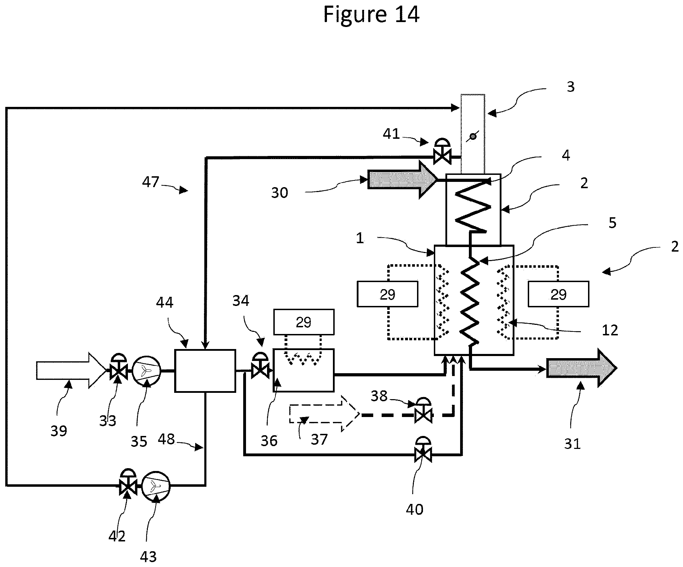

Figure 14 illustrates, schematically and in a non-limitative way, an electric heating unit according to a third implementation of the invention. Elements that are identical to those of the implementation of Figures 12 and 13 will not be described again. This implementation does not comprise any uncompressed-gas supply. In this implementation, the compressed combustion gas supply 39 is connected a control valve 33 (control damper), a fan 35, a heat exchanger 44, then two lines connected to the bottom of the radiation volume: one comprising an electric pre-heater 36 and a control valve 34 (control damper), the other by-passing the pre-heater and comprising only a control valve 40.

The heat exchanger 44 allows heat to be transferred between the combustion gas supply 39 and (convective) gas coming from the chimney via the pipe 47, the latter further comprises a control valve 41 (control damper). On exiting the heat exchanger 44, the cooled (convective) gas is returned to the chimney 3 via the pipe 48, which comprises a fan 43 and a control valve 42 (control damper), and then is flared out of the heating unit

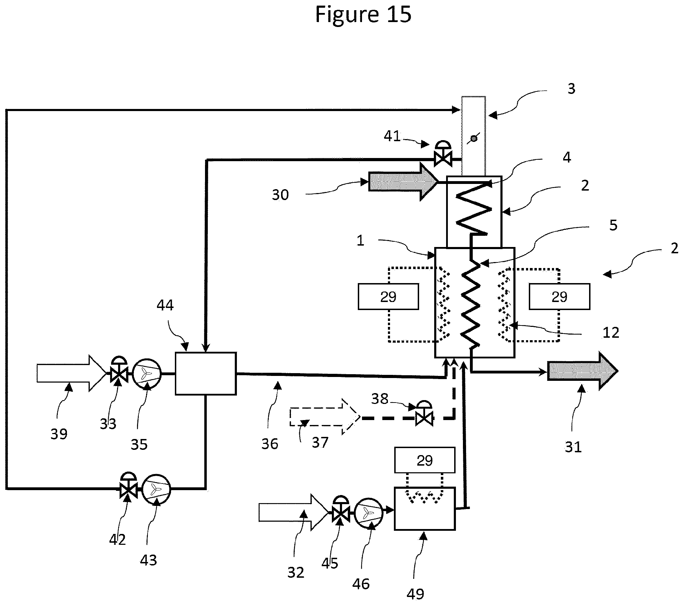

Figure 15 illustrates, schematically and in a non-limitative way, a heating unit according to a fourth implementation of the invention. Elements that are identical to those of the implementation of Figure 14 will not be described again. This implementation further comprises an uncompressed-gas supply 32, in which is provided a control valve 45 (control damper), a fan 46 and a pre-heater 49. In addition, the compressed-gas supply 39 comprises only one line exiting from the heat exchanger 44.

### Method for retrofitting a furnace

Furthermore, the invention relates to a method for retrofitting (a.k.a. revamping) a furnace for heating a fluid feedstock by combustion of a fuel, for example a combustion tubular furnace. The furnace comprises a radiation volume equipped with a plurality of radiation tubes for flow of said fluid feedstock, and a convection volume equipped with a plurality of convection tubes for flow of said fluid feedstock. The convection volume is arranged above or beside said radiation volume in the position of use of the furnace, such that a gas coming from said radiation volume flows through said convection volume. The radiation volume comprises at least one burner for generating heat to drive the combustion of a fuel.

According to the invention, the method comprises at least the following step:
a) at least one electric heating device is installed in the radiation volume.

Thus, the method regards revamping a combustion furnace, especially a combustion tubular furnace, into a furnace according to any one of the variants or combinations of variants described above. In other words, the method allows a furnace such as illustrated in Figure 1 to be converted into an electric or hybrid furnace according to one of the embodiments of Figures 3, 4 and 6 to 9. In this way, it is possible to make an existing furnace a furnace having a smaller environmental footprint, simply, while decreasing modification costs. In addition, it is possible to make such a furnace more easily and more precisely controllable temperature-wise.

According to one embodiment of the invention, the electric heating device may be installed (depending on the embodiment of the furnace):
- along a wall, especially a vertical wall of the radiation volume, and/or
- vertically at the centre of the radiation volume, and/or
- horizontally at the centre of the radiation volume.

Where appropriate, the method may comprise a step of installing a vertical wall at the centre of the radiation volume.

For the installation of the electric heating device, the method may comprise a prior step of installing at least one holder of the electric heating device. In the example of Figure 10, it may be a question of installing at least one hanger. In the example of Figure 11, it may be a question of installing at least one panel holder.

According to one implementation of the invention, the method may comprise a step of dismounting at least one burner from the combustion furnace, and especially from a combustion tubular furnace. According to a first variant of embodiment, all of the burners of the combustion furnace, especially a combustion tubular furnace, are dismounted, thus forming a retrofitted (revamped) electric furnace, and especially an electric tubular furnace. According to a second variant of embodiment, at least some of the burners of the combustion furnace are retained, thus forming a retrofitted hybrid furnace, and especially a hybrid tubular furnace. Alternatively, all of the burners of the combustion furnace may be retained thereby forming a retrofitted hybrid furnace as well.

According to one aspect of the invention, the method may comprise a step of installing electrical insulation, so as to ensure protection of equipment and users.

According to one option of embodiment, the method may comprise a step of installing thermal insulation complementary to the thermal insulation already present in the radiation volume. This is done so as to limit heat loss, and to improve the energy efficiency of the furnace.

According to one embodiment, control means for controlling the at least one electric heating device may be installed, with a view to controlling the temperature within the furnace.

Furthermore, at least one instrument may be installed in the furnace: temperature sensor, voltage and/or current sensor for the electric heating device (contactors, regulators, current transformers, circuit breakers, fuses, relays, etc.), flow-rate sensor, etc. with a view to controlling the temperature of the furnace.

In order to facilitate gas flow through the furnace, means for forcing gas to flow may be installed within the furnace.

According to one implementation of the invention, reflective or high-emissivity elements may be added to the radiation zone, to promote thermal radiation towards the radiation tubes.

The invention may also relate to retrofitting (or revamping) a heating unit, to obtain a heat-treating unit according to one of the variants or combinations of variants described above. This method implements the method for retrofitting (or revamping) the furnace according to one of the variants or combinations of variants described above.

Furthermore, this method may comprise at least one of the following steps:
- adding a pre-heating means: electric heat exchanger or a heat exchanger for exchanging heat with exhaust gases,
- adding a pipe for recycling some or all of the chimney gases, this pipe optionally containing a fan and a control valve,
- adding various control valves (control dampers) for managing flow rates and/or pressures, and
- adding various instruments (sensors).

## Claims

1. Furnace for heating a fluid feedstock, said furnace comprising a radiation volume (1), said radiation volume (1) comprising a plurality of radiation tubes (5) for flow of said fluid feedstock and at least one electric heating device (12, 14, 9, 21), heat generated by said at least one electric heating device (12, 14, 9, 21) being transmitted by radiation to said plurality of radiation tubes (5), **characterized in that** said furnace further comprises a convection volume (2) arranged above or beside said radiation volume in a position of use of said furnace, such that a gas coming from said radiation volume (1) flows through said convection volume (2), and **in that** said convection volume (2) comprises a plurality of convection tubes (4) for flow of said fluid feedstock, heat generated by said at least one electric heating device (12, 14, 9, 21) of said radiation volume being transmitted by convection to said plurality of convection tubes (4).

2. Furnace for heating a fluid feedstock according to Claim 1, wherein at least one electric heating device (12, 9) is arranged along at least one wall of said radiation volume.

3. Furnace for heating a fluid feedstock according to any of preceding claims, wherein at least one electric heating device (14, 9, 21) is arranged at the centre of said radiation volume, especially horizontally or vertically.

4. Furnace for heating a fluid feedstock according to any of preceding claims, wherein said furnace further comprises an inlet for at least one gas into the lower portion of said radiation volume (1) in the position of use of said furnace, and at least one chimney (3) in a portion of said convection volume (2) in the position of use of said furnace for exhausting gas.

5. Furnace for heating a fluid feedstock according to any of preceding claims, wherein said radiation volume (1) comprises at least one complementary non-electric heating device, especially a burner (6).

6. Furnace for heating a fluid feedstock according to any of preceding claims, wherein at least one heating device (12, 14, 9, 21) comprises a bundle of electric resistors (22) taking the form of metal strips or wires, said metal strips or wires preferably being suspended or fastened to a panel.

7. Furnace for heating a fluid feedstock according to any of preceding claims, wherein said convection volume (2) further comprises a plurality of secondary convection tubes for flow of at least one secondary fluid, heat generated by said at least one electric heating device being transmitted by convection to said plurality of secondary convection tubes.

8. Furnace for heating a fluid feedstock according to any of preceding claims, wherein said furnace comprises means for controlling (29) said at least one electric heating device.

9. Heating unit for a fluid feedstock, **characterized in that** it comprises a furnace according to one of the preceding claims, a supply of fluid feedstock (30) to be heat-treated for supplying said furnace within the plurality of convection tubes (4) of said convection volume (2), an outlet for heat-treated fluid feedstock (31) for discharging said fluid feedstock from the plurality of radiation tubes (5) of said radiation volume (1), and a gas supply (32) of said furnace.

10. Heating unit according to Claim 9, wherein the gas supply of said furnace comprises at least one pre-heating heat exchanger (36, 44), especially an electric heat exchanger (36) or a heat exchanger (44) supplied with a gas coming from the convection volume (2).

11. Heating unit according to either of Claims 9 and 10, wherein said furnace comprises a chimney (3) for exhausting gas in the upper portion of said convection volume (2) in the position of use of said furnace, said chimney (3) of said furnace being connected to said gas supply of said furnace (39).

12. Heating unit according to one of Claims 9 to 11, wherein said heating unit further comprises a fuel supply (37).

13. Method for retrofitting a furnace for heating a fluid feedstock by combustion of a fuel, said furnace comprising a radiation volume (1) equipped with a plurality of radiation tubes (5) for flow of said fluid feedstock, and a convection volume (2) equipped with a plurality of convection tubes (4) for flow of said fluid feedstock, the convection volume (1) being arranged above or beside said radiation volume (1) in a position of use of said furnace, such that a gas coming from said radiation volume (1) flows through said convection volume (2), said radiation volume (1) comprising at least one burner (6) for generating heat to drive the combustion of a fuel, **characterized in that** at least the following step is carried out:
a. said radiation volume is equipped with at least one electric heating device (12, 14, 9, 21), in particular along at least one wall of said radiation volume (1) or at the centre of said radiation volume (1).

14. Method for retrofitting a furnace according to Claim 13, wherein the method comprises a step of demounting at least one burner (6) within the furnace.

15. Method for retrofitting a furnace according to either of Claims 13 and 14, wherein the method comprises at least one of the following steps:
a. at least one holder for said electric heating device is installed in said radiation volume;
b. at least one electric and/or thermal insulator is installed in said radiation volume;
c. means for forcing gas to flow are installed within said furnace; and
d. means for instrumenting and controlling said at least one electric heating device are installed.
